# EUROPEAN PATENT SPECIFICATION

(11) **EP 2 524 588 B1**
(45) Date of publication and mention of the grant of the patent: **04.01.2017**
(21) Application number: 12460020.6
(22) Date of filing: 09.05.2012
(51) Int. Cl.: A01D 34/24, A01D 34/64

(54) **Positioning system of a cutting unit in a rotary mower**
Positionierungssystem einer Schneideinheit in einem Rotormäher
Système de positionnement d'une unité de découpe dans une tondeuse rotative

(30) Priority: 16.05.2011 PL 39489211
(43) Date of publication of application: 21.11.2012
(73) Proprietor: Samasz Sp. z.o.o., 15-161 Bialystok (PL)
(72) Inventor: Stolarski, Antoni, 15-157 Bialystok (PL)

(56) References cited:
- SI-A2- 22 826
- US-B1- 6 892 518
- US-B1- 7 549 243

## Description

The subject of the invention is a central suspension of the cutting unit of a rotary mower with a central 3-point linkage.

A mower according to the preamble of claim 1 is known from document SI 22826

In the conventional solutions of rotary mowers with three-point suspension system of tractor, raising and lowering of the mowing unit is operated by a hydraulic cylinder, and the mechanical blocks located on the hydraulic cylinder secure the mowing unit in the correct position for transport by road. Changing the position of the cutting unit from the transport mode to the operating mode and vice versa is done with the steering mechanism and the lock is released by pulling a cord.

The essence of the solution according to the invention is the central suspension of a rotary mower's cutting unit comprising of a rotor arm connected to the carrying arm to which the cutting unit is attached. The cutting unit can be raised to the desired position by means of a hydraulic cylinder and can be blocked by the locking mechanism controlled by cords, which is characterized in that the locking element is a ratchet mechanism located on the rotor arm. The ratchet mechanism includes three rotationally mounted ratchets where the upper one works with the lower one by sliding over its teeth. The ratchet which is at the end of the carrying arm cooperates with the other ratchets, the upper and the lower, depending on the position of the cutting unit.

It is beneficial when the upper one has a limited rotation about the axis by a limiting element.

It is beneficial when the lower ratchet has such a position against the axis of rotation which causes it to fall.

The solution for central suspension of the cutting unit as per the invention with a ratchet mechanism consisting of three cooperating ratchets secures the mowing unit in the correct position during road transport and in the operating mode. The benefits of using a system of ratchets are simple construction, compactness of its construction and reliability of operation.

The subject of the invention is shown in the drawing, where Fig. 1 shows the system of cutting unit central suspension of a rotary mower in a side view; Fig. 2 shows an enlarged "S" detail in which the cutting unit is visualized in a transport mode, where the upper ratchet blocks the lower ratchet with a tooth, with the involvement of a spring. Fig. 3 shows layout of the ratchet blocking a ratchet with the involvement of a spring in an operating mode of the mower's cutting unit. Fig. 4 shows layout of the ratchets in operating mode over headland of the mower's cutting unit. Fig. 5 shows layout of the ratchets in the rest mode of the mower's cutting unit. Fig. 6 shows a sample implementation of a rotary mower with central suspension according to the invention in axonometric view from the back.

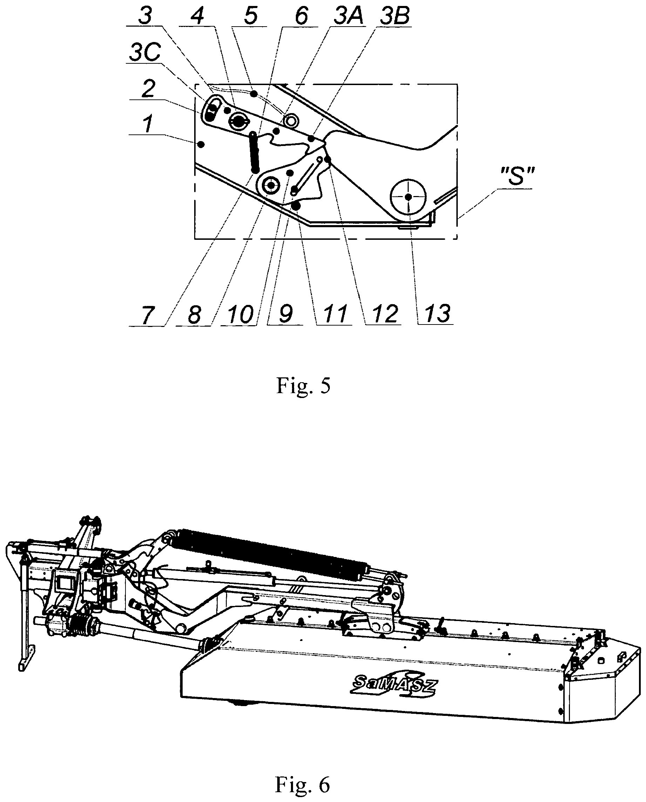

The central suspension of the cutting unit 14 has been presented in the sample implementation of a rotary disc mower with a central suspension system. The central suspension of the cutting unit 14 shown in fig. 6 allows one to maintain equal pressure of the whole width of the cutting unit 14 on the ground. The central suspension of the cutting unit 14 has a ratchet mechanism, which is located on a rotor's arm 1 of the central suspension system. The ratchet system consists of three rotationally mounted ratchets 3, 10, and 12. The lower ratchet 10 works with the upper ratchet 3 sliding over its teeth 3A and 3B. The third ratchet 12 being the end of the suspension system's carrying arm, depending on the position of the cutting unit 14, cooperates with the other two ratchets, which is the upper one 3 and the lower one 10. The upper ratchet is being pressed down by a spring 6 to the lower ratchet 10 and it has a pit 3C in which a mechanism 2 limiting its rotation is located. The lower ratchet 10 has a handle 9 and its rotation is limited by pins 7, 11.

During transport, the positioning of the cutting unit 14 in the correct position is provided by the upper ratchet 3 which is blocking the lower ratchet 10 with the help of a spring 6.

In the transition from the operating mode to transport mode, done by pulling a cord 5 connected to the upper ratchet 3, the ratchet is rotated around the rotation axis 4, limited by a limiting mechanism 2, in result of which the ratchet 10 by the force of gravity rotates around axis 8 until the ratchet 3 catches with the handle 9. The ratchet 12 changes the angular position around the axis 13.

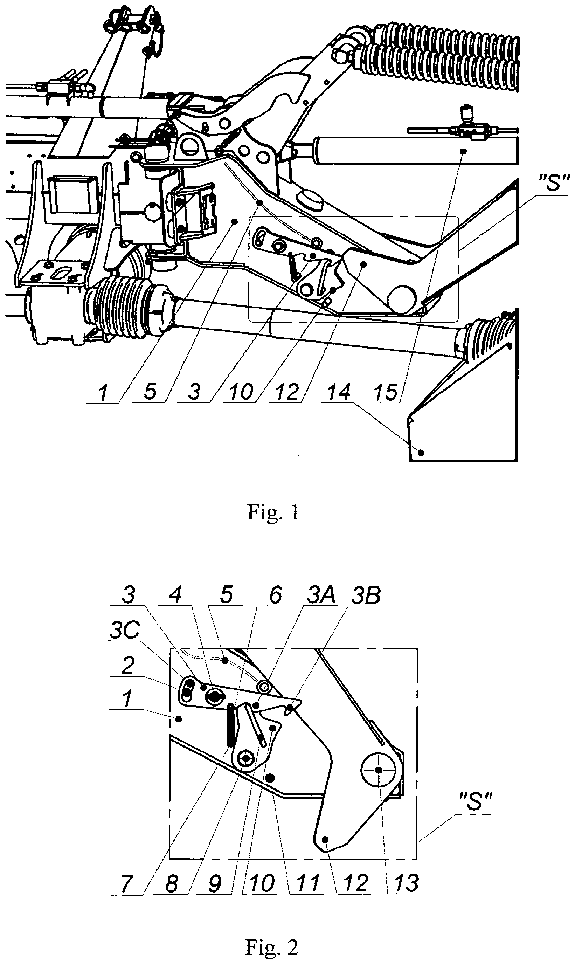

In the operating mode of the cutting unit 14, the upper ratchet 3 blocks the ratchet 10 with the spring 6. Ratchets 3, 10 and 12 have different angular orientations as compared to the transport mode as shown in Fig.2.

At the end of the mowed area we raise the cutting unit 14 of the mower with the hydraulic cylinder 15.

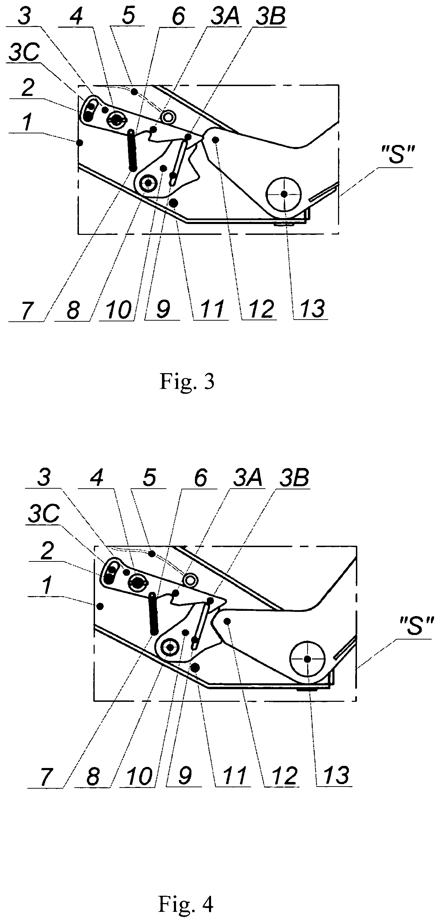

When transitioning from the operating mode to the operating mode on the headland with hydraulic cylinder 15, the positions of ratchets 3 and 10 remain in the same setting as described above. Ratchet 12 changes the angular position around the axis 13 which rotation is limited by the ratchet 10. In the working mode on the headland the upper ratchet 3 blocks the lower ratchet 10 with the spring 6, whereas the lower ratchet 10 blocks ratchet 12, but the ratchet 12 has a different angular position in relation to the transport mode as shown in Fig.2 as well as in relation to the operating mode shown in Fig.3.

In the rest mode shown in Fig.5 the positioning of the ratchet 3 limited by the limiting mechanism 2 with the action of spring 6. Ratchet 10, whose movement is limited with the pin 11 blocks the ratchet 12. During the transition from the operating mode on the headland to the operating mode, the positioning of the ratchets 3 and 10 remain unchanged. The ratchet 12 changes the angular position around the axis 13.

By changing the angular position of a lever 10 about the axis 8 by means of the handle 9 until it is blocked by the pin 7, by which we change the position of the upper ratchet 3 as well as its catching with the handle 9. The ratchet 12 changes its angular position by rotation around the axis 13 which causes the transition from operating mode to a transport mode.

After changing from the transport mode to the resting mode, the ratchet 12 changes its angular positioning through a rotation around axis 13, which causes a transition from the operating to the transport mode.

When transitioning from the transport mode to the resting mode, the ratchet 12 changes the angular positioning around the axis 13. Pulling the cord 5 connected to the upper ratchet 3 causes rotation of the ratchet 3 around the axis of rotation 4 limited by the limiting mechanism 2, in result of which the ratchet 10 by the force of gravity rotates around the axis 8 until its movement is limited by the limiting mechanism 11.

## Claims

1. A central suspension of a rotary mower's cutting unit (14) comprising a rotor arm connected to a carrying arm to which is attached the cutting unit (14) which can be raised to the desired position by means of a hydraulic cylinder (15) and which can be blocked by a locking mechanism controlled by cords, **characterized in that** the locking element is a ratchet mechanism located on the rotor arm (1) and comprising three rotationally mounted ratchets (3,10, 12), where the lower one (10) works with the upper one (3) by sliding over the teeth (3A, 3B), of the upper ratchet (3), while the ratchet (12) which is at the end of the carrying arm works with the other ratchets (3, 10) depending on the positioning of the cutting unit (14).

2. The central suspension of the rotary mower's cutting unit (14) according to Claim 1, **characterized in that** the upper ratchet (3) has a limited rotation about its axis (4) through a limiting mechanism (2).

3. The central suspension of the rotary mower's cutting unit (14) according to Claim 1, **characterized in that** the lower ratchet (10) is positioned in relation to its axis of rotation (8) in a way that its center of gravity is always on the right side the axis of rotation (8), which makes autogenous rotation of the ratchet (10) in relation to the axis of rotation (8).

## Patentansprüche

1. Die zentrale Aufhängung der Kreiselmäher-Schneideeinheit (14) besteht aus einem Rotorträger, der mit einem Tragarm verbunden ist, an welchem die Schneideeinheit angebracht ist (14), die mittels eines Hydraulikzylinders in die gewünschte Position gehoben werden kann (15) und welche durch einen Verriegelungsmechanismus, der durch Schnüre gesteuert wird, blockiert werden kann, der **dadurch gekennzeichnet ist, dass** das Verriegelungselement ein Sperrmechanismus ist, der sich am Ende des Rotorträgers befindet (1) und aus drei drehbar gelagerten Ratschen (3,10, 12) besteht, wobei die untere (10) mit der oberen arbeitet (3), indem sie über die Zähne (3A, 3B) der oberen Ratsche gleitet (3), während die Ratsche (12), welche am Ende des Tragarmes angebracht ist, mit den anderen Ratschen arbeitet, (3, 10) in Abhängigkeit von der Positionierung der Schneideeinheit (14).

2. Die zentrale Aufhängung der Kreiselmäher-Schneideeinheit (14) ist gemäß dem Anspruch 1 **dadurch gekennzeichnet, dass** die obere Ratsche (3) eine begrenzte Rotation um ihre Achse (4) hat, was durch einen Begrenzungsmechanismus verursacht (2) wird.

3. Die zentrale Aufhängung der Kreiselmäher-Schneideeinheit (14) ist gemäß dem Anspruch 1 **dadurch gekennzeichnet, dass** die untere Ratsche (10) in Bezug auf ihre Drehachse (8) so positioniert ist, dass ihr Schwerpunkt immer auf der rechten Seite der Drehachse (8) ist, was eine autogene Drehung der Ratsche (10) in Bezug auf die Drehachse verursacht (8).

## Revendications

1. La suspension centrale de l'unité de coupe de la faucheuse rotative (14) comprenant un bras de rotor connecté au bras support auquel est attachée l'unité de coupe (14) qui peut être soulevée jusqu'à une position désirable au moyen d'un cylindre hydraulique (15) et qui peut être bloquée par un mécanisme de blocage contrôlé par les cordons, **caractérisée en ce que** l'élément de blocage est un mécanisme à cliquet posé sur le bras de rotor et comprenant (1) trois cliquets installés en rotation (3,10,12), où celui inférieur (10) travaille avec celui supérieur (3) en glissant sur les dents (3A, 3B) du cliquet supérieur (3), pendant que le cliquet (12) qui est au bout du bras support travaille avec les autres cliquets (3, 10) en fonction de la position de l'unité de coupe (14).

2. La suspension centrale de l'unité de coupe de la faucheuse rotative (14) aux termes du Sinistre 1, **caractérisée en ce que** la rotation du cliquet supérieur (3) autour de son axe (4) est cadrée par un mécanisme de limitation (2).

3. La suspension centrale de l'unité de coupe de la faucheuse rotative (14) aux termes du Sinistre 1, **caractérisée en ce que** le cliquet inférieur (10) est positionné par rapport à son axe de rotation (8) de manière à ce que son centre de gravité soit toujours sur le côté droit de l'axe de rotation (8), ce qui lie la rotation autogène du cliquet (10) avec l'axe de rotation (8).
